# EUROPÄISCHE PATENTANMELDUNG

(11) **EP 2 626 159 A2**
(43) Veröffentlichungstag der Anmeldung: **14.08.2013**
(21) Anmeldenummer: 13165840.3
(22) Anmeldetag: 01.03.2006
(51) Int. Cl.: B23G 7/02, B23G 7/00

(54) **Werkzeugset zur Erzeugung von Gewinden**

(30) Priorität: 01.03.2005 DE 102005009829
(62) Teilanmeldung aus: 06004136.5
(71) Anmelder: EMUGE-Werk Richard Glimpel GmbH & Co.KG Fabrik für Präzisionswerkzeuge, 91207 Lauf a.d. Pegnitz (DE)
(72) Erfinder: Glimpel, Helmut, 91207 Lauf (DE); Hechtle, Dietmar, 91257 Pegnitz (DE); Zeus, Thomas, 91217 Hersbruck (DE)
(74) Vertreter: Schröer, Gernot H.

(57) **Zusammenfassung**

Das Werkzeug zur spanlosen Erzeugung eines Gewindes, insbesondere zur Erzeugung eines Innengewindes, ist hinsichtlich der Umformhöhe der Drückstollen, deren radialer Steigung und der Formflächen in spezieller Weise an den Werkstoff des Werkstücks angepasst.

## Beschreibung

Die Erfindung betrifft ein Werkzeugset zur Erzeugung von Gewinden, insbesondere zur Erzeugung von Innengewinden, und ein Verfahren zur Erzeugung von Gewinden unter Verwendung des Werkzeugsets.

Zur Gewindeerzeugung oder Gewindenachbearbeitung sind neben spanabhebenden auch spanlose Verfahren und Gewindewerkzeuge bekannt. Einen Überblick über im Einsatz befindliche Gewindeerzeugungswerkzeuge und Arbeitsverfahren gibt das Handbuch der Gewindetechnik und Frästechnik, Herausgeber: EMUGE-FRANKEN, Verlag: Publicis Corporate Publishing, Erscheinungsjahr: 2004 (ISBN 3-89578-232-7*),* im Folgenden nur als "EMUGE-Handbuch" bezeichnet.

Unter die spanlosen Gewindeerzeugungswerkzeuge fallen die sogenannten Gewindefurcher (vgl. EMUGE-Handbuch, Kapitel 9, Seiten 299 bis 324) und, nur für Außengewinde, die Gewindewalzwerkzeuge (vgl. EMUGE-Handbuch, Kapitel 11, Seiten 373 bis 404*).*

Gewindefurcher sind axial zu ihrer Werkzeugachse arbeitende Gewindewerkzeuge mit einem an einem Werkzeugschaft ausgebildeten Arbeitsbereich, der eine schraubenförmig die Werkzeugachse umlaufende Anordnung von Wirkflächen, die Formkeile oder Drückstollen oder Furchzähne genannt werden, aufweist, mit denen das Gewinde bei Drehung des Werkzeugs um die Werkzeugachse und axialem Vorschub entlang der Werkzeugachse in das Werkstück eingedrückt wird. Gewindefurcher erzeugen also durch Druck eine Umformung des Werkstückes. Der Vorteil dieser spanlos arbeitenden Gewindewerkzeuge gegenüber spanabhebenden Gewindewerkzeugen ist, dass durch die Verformung der Oberfläche und die damit verbundene Verfestigung die Härte des Werkstoffs im Bereich des Gewindeprofils ansteigt und somit ein verschleißfesteres Gewinde erzeugt werden kann. Der Schaft ist in der Regel zylindrisch ausgeführt und mit seinem dem Werkstück und Arbeitsbereich abgewandten Ende im Spannfutter einer Werkzeugmaschine oder eines Antriebs aufgenommen und gehalten.

Der Arbeitsbereich ist mit einem Gewindeformprofil versehen, das die Gegenform zu dem zu erzeugenden Gewinde darstellt, insbesondere also die gleiche Gewindesteigung aufweist. Im Längsschnitt bzw. im Gewindeprofil weist das Gewindeerzeugungswerkzeug also abwechselnd Erhöhungen bzw. Zähne und Vertiefungen bzw. Rillen auf, die normalerweise jeweils denselben Abstand zueinander besitzen, was bedeutet, dass die Steigung der Gewindegänge konstant ist. Die Zähne sind in ihrem Querschnitt im Wesentlichen radial nach außen spitzwinkelig zulaufend und im Kopf- oder Scheitelbereich in der Regel etwas abgerundet ausgebildet. Im Arbeitsbereich weist der Gewindefurcher in der Regel einen annähernd polygonalen Querschnitt auf, wobei die Wirkflächen oder Drückstollen (Formkeile) die Eckbereiche des Polygons bilden. Zwischen den Polygoneckbereichen oder Drückstollen können Nuten und alternativ oder zusätzlich können innere Kanäle im Werkzeug verlaufen jeweils zum Zuführen von Kühl- und/oder Schmiermittel.

Üblicherweise verjüngt sich der Arbeitsbereich des Gewindefurchers zur Werkzeugspitze hin in einem meist kegelförmigen Anlaufbereich oder Anfurchbereich, d.h. die Drückstollen sind dort bei weitgehend unveränderter Form nach innen versetzt. Dadurch wird das Gewindeprofil, insbesondere die Gewindetiefe, sukzessive durch die zunehmende radiale Zustellung der Drückstollen erzeugt und das Eindringen der ersten Drückstollen oder Anfurchzähne in die Werkstückoberfläche bzw. die Innenwand der Bohrung wird erleichtert und Umformkräfte an den Drückstollen werden reduziert. Die Zunahme der radialen Zustellung oder des radialen Abstands von der Werkzeugachse zwischen benachbarten oder aufeinander folgenden Drückstollen oder Furchzähne im Einlaufbereich wird auch als Umformhöhe bezeichnet.

In einem sich an den Anlaufbereich anschließenden Führungs- oder Kalibrierbereich bleibt die radiale Zustellung oder der radiale Abstand oder Außendurchmesser der Drückstollen oder Furchzähne konstant. Dieser Bereich dient zur Führung des Gewindefurchers in dem vom Anlaufbereich erzeugten Gewinde und gegebenenfalls zum Nachglätten oder Kalibrieren des Gewindes.

Zur Erzeugung eines Innengewindes mit einem Gewindefurcher wird zunächst eine Bohrung in dem Werkstück erzeugt mit einem kleineren Außendurchmesser als der Außendurchmesser des Arbeitsbereichs des Gewindefurchers und der Gewindefurcher wird dann mit dem Arbeitsbereich voran mit einem entsprechenden Vorschub und unter Drehung um die Längsachse des Werkzeugschafts in der Drehrichtung des Gewindes, also Rechtslauf bei Rechtsgewinde und Linkslauf bei Linksgewinde, in die Bohrung eingeführt. Dabei werden die Furchzähne oder Drückstollen oder Gewindespitzen des Gewindefurchers in die Oberfläche des Werkstücks bzw. der Bohrung gedrückt. Der Werkstoff des Werkstücks wird dabei plastisch verformt und radial in die Vertiefungen bzw. Rillen des Arbeitsbereichs des Gewindefurchers verdrängt. Das Drehmoment steigt beim Anfurchen bis zum Eingriff aller Anfurchzähne an. Danach wird der Gewindefurcher wieder unter Drehung in die entgegengesetzte Richtung aus dem Gewinde unter abnehmendem Gleitreibungsmoment herausgedreht. Der Werkstoff federt beim Gewindefurchen in der Regel nach der plastischen Verformung um den elastischen Anteil zurück. Durch diese Verdrängung und auch das elastische Rückstellen ist der Kerndurchmesser des erzeugten Gewindes ohne Nachbearbeitung kleiner als der ursprüngliche Außendurchmesser der Bohrung und auch als der Gewindeteil am Arbeitsbereich des Gewindefurchers.

In dem EMUGE-Handbuch, Kapitel 9, Seiten 301 bis 322 sind verschiedene konkrete Ausführungen von Gewindefurchern beschrieben.

Dabei gibt es Ausführungen von Gewindefurchern mit einer Vollspitze am Werkzeugende und Ausführungen ohne Vollspitze mit einer flachen Stirnseite am Werkzeugende vor dem Anfurchbereich. Der Anfurchkegelwinkel κ, der die Steigung oder die radiale Zunahme oder Zustellung und damit die Umformhöhe der Drückstollen im Anfurchbereich beschreibt, ist bei allen Ausführungsformen gleich. Es werden lediglich unterschiedliche Anfurchkegellängen in Gewindegängen von über 2 bis 3 oder von über 3,5 bis 1,5 oder von 1,5 von 2 beschrieben (Seite 322, 9.6.3). Im Anfurchkegelbereich steigen vollständige Gewindezähne im Durchmesser an, wie unter 9.6.2 auf Seite 322 ausgeführt.

Der Werkstoff muss zum Gewindefurchen gut kalt umformbar sein. Zum Gewindefurchen eignen sich u.a. Leichtmetalle und Leichtmetalllegierungen, vor allem Aluminiumlegierungen, insbesondere Aluminium-Knetlegierungen und Aluminium-Gusslegierungen, und Magnesiumlegierungen, Nickel- und Kobaltlegierungen, Titan- und Titanlegierungen, Buntmetalle, Kupfer und Kupferlegierungen wie Bronze oder Messing und Wolfram-Kupfer-Legierungen, Stähle für allgemeine Anwendungen und rost-/säure-/hitz-beständige Stähle, Gusswerkstoffe wie Gusseisen, insbesondere mit Graphit, und Kunststoffe. Diese Werkstoffe weisen nun jedoch zum Teil sehr unterschiedliche Eigenschaften auf, vor allem hinsichtlich Härte, Festigkeit, Fließverhalten, Abrasion und Adhäsion.

Im EMUGE-Handbuch, Kapitel 9, Seiten 299 bis 324 werden einige Parameter des Gewindefurchens als vom Werkstoff des Werkstücks und dessen Werkstoffeigenschaften abhängig beschrieben.

So wird ausgeführt, dass die maximal drückbare Gewindesteigung von den Werkstoffeigenschaften begrenzt ist und Steigungen über 3 mm erfahrungsgemäß nicht mehr zu furchen seien.

Für verschiedene Werkstoffe und Werkstoffgruppen werden auf den *Seiten 320 und 321* im *EMUGE-Handbuch* Empfehlungen für die Umfangsgeschwindigkeit des Gewindefurchers abhängig von dem Material des Gewindefurchers, nämlich HSL-E (Schnellarbeitsstahl) mit und ohne Hartstoff-Beschichtung und für Vollhartmetall für Furch- und Schaftteil (VHM) sowie eine Kombination aus Vollhartmetall für das Furchteil und einem Werkzeugstahl für den Schaft (KHM) ohne Beschichtung, gegeben.

Ferner wird bei den auf den Seiten 303 bis 307 und 109 bis 131 im EMUGE-Handbuch*,* beschriebenen konkreten Werkzeugen für einen Teil der angegebenen Werkstückwerkstoffe vorgeschlagen, Beschichtungen als Verschleißschutz oder Gleitschichten einzusetzen und unterschiedliche Materialien für die Beschichtung, beispielsweise TiN oder TiCN oder TiAlN oder CrN oder Diamant oder Gleitschichten (MoS₂, WC/C), zu verwenden und bei anderen Werkstoffen auch gar keine Oberflächenbeschichtung. Insbesondere werden Beschichtungen des Werkzeugs bei Materialhaftung (Adhäsion) am Werkzeug (*EMUGE-Handbuch,Seite* 323) empfohlen.

Für abrasive Werkstoffe des Werkstücks wird Hartmetall als Werkstoff des Werkzeugs empfohlen (*EMUGE-Handbuch, Seite 305).*

Ferner wird der Einsatz und die Auswahl von Schmierstoffen abhängig vom Werkstückwerkstoff beschrieben (*EMUGE-Handbuch, Seite 311 unten).*

Aus *WO 02*/*094491 A1* sind ferner ein spanlos arbeitendes Gewindeformwerkzeug und ein Verfahren zur spanlosen Gewindeerzeugung bekannt, die auf einem als Zirkulargewindeformen bezeichenbaren Arbeitsprinzip beruhen. Das in *WO 02*/*094491 A1* offenbarte Gewindeformwerkzeug ist langgestreckt und umfasst einen Arbeitsbereich mit einem oder mehreren durch Ringnuten voneinander getrennten ringförmigen Umfangsprofilen(en). Jedes Umfangsprofil ist in seinem Zentrum nicht-kreisförmig ausgebildet und weist wenigstens drei Erhebungen nach Art eines Polygons als Drückstollen auf. Zusätzlich können auch axial verlaufende Nuten zwischen den einzelnen Drückstollen an der Außenfläche des Werkzeugs zum Zuführen von Kühlflüssigkeit vorgesehen sein. Als Material für das Werkzeug wird entweder ein Carbid oder Schnellstahl vorgeschlagen.

Dieses Werkzeug wird nun bei dem Verfahren gemäß *WO 02*/*094491 A1* unter Drehung um seine eigene Achse in eine Bohrung mit größerem Durchmesser als das Werkzeug eingeführt und vollführt eine kreisförmige Bewegung entlang des Umfangs der Bohrung sowie zugleich eine Vorschubbewegung in die Bohrung und formt dadurch spanlos das Gewinde in der Bohrung.

Das Gewinde wird gemäß *WO 02*/*094491 A1* also, im Gegensatz zum axialen Gewindefurchen, nicht mittels einer spiralförmigen, der Gewindesteigung angepassten Wirkfläche am Werkzeug und einer nur axialen oder linearen Vorschubbewegung des Werkzeugs kombiniert mit einer Drehung um die eigene Werkzeugachse geformt, sondern mittels ringförmiger und damit steigungsloser und zugleich im Querschnitt polygonaler Wirkflächen am Werkzeug einerseits und einer mit einer Drehung des Werkzeugs um die eigene Längsachse kombinierten schraubenförmigen Bewegung des Werkzeugs, die aus einer linearen Vorschubbewegung axial zur Längsachse des Werkzeugs und einer Zirkularbewegung der Längsachse des Werkzeugs um eine Mittelachse der Bohrung resultiert, andererseits.

Dieser Gewindeformer wird im Folgenden auch als Zirkulargewindeformer oder, unter Erweiterung der bislang üblichen Nomenklatur, als Zirkulargewindefurcher und das zugehörige Verfahren als Zirkulargewindeformen oder Zirkulargewindefurchen bezeichnet.

Ein weiterer Zirkulargewindeformer ist nun auch aus der DE 103 18 203 A1 bekannt geworden. Dieser bekannte Zirkulargewindeformer weist zumindest einen, vorzugsweise zumindest zwei Profilvorsprünge an seinem Formkopf auf, die über den Umfang durchgehend und mit sich über den Umfang verändernder radialer Erstreckung polygon ausgebildet sind. Die Profilvorsprünge bilden dadurch über den Umfang jeweils mehrere Drückstollen, die über den Umfang gleichmäßig oder auch ungleich verteilt sein können. Ferner kann der Formkopf zumindest im Bereich der Drückstollen mit einer Beschichtung versehen sein zur Reibungsverminderung und/oder Verschleißminderung.

Es ist nun Aufgabe der Erfindung, ein Set von wenigstens zwei Gewindeerzeugungswerkzeugen und ein Verfahren zur Gewindeerzeugung unter Verwendung des Sets Gewindeerzeugungswerkzeugs anzugeben, bei denen eine neue Anpassung des Werkzeugs an unterschiedliche Werkstoffe des Werkstücks möglich ist.

Diese Aufgabe wird hinsichtlich des Werkzeugsets mit den Merkmalen des Patentanspruchs 1 und hinsichtlich des Verfahrens mit den Merkmalen des Patentanspruchs 13 gelöst. Vorteilhafte Ausgestaltungen und Weiterbildungen ergeben sich aus den von Patentanspruch 1 bzw. Patentanspruch 13 jeweils abhängigen Patentansprüchen.

Jedes Werkzeug des Werkzeugsets zur Erzeugung von Gewinden gemäß Patentanspruch 1 ist um eine Werkzeugachse drehbar und weist einen Arbeitsbereich mit mehreren axial zur Werkzeugachse versetzt zueinander angeordneten Drückstollen (oder: Furchzähnen, Formkeilen) zum Eindrücken (oder: Einformen, plastischen Formen) des Gewindes in eine Werkstückoberfläche eines Werkstücks auf.

Die Erfindung beruht nun auf der Überlegung, das gewindeformende Werkzeug in geometrischen Parametern oder Merkmalen an den Werkstoff des Werkstücks, in dem das Gewinde erzeugt werden soll, anzupassen oder für den jeweiligen Werkstoff ausgelegen.

Gemäß Patentanspruch 1 kommen zunächst drei geometrische Parameter oder Merkmale als Varianten alternativ oder in jeder beliebigen Kombination in Betracht:
In einer ersten Variante der Anpassung von Werkzeug an Werkstückmaterial nimmt in einem Teilbereich (oder: Einlaufbereich, Anlaufbereich, Anfurchbereich) des Arbeitsbereichs oder auch im gesamten Arbeitsbereich die maximale (oder: äußere) radiale Ausdehnung (oder: äußerer oder maximaler radialer Abstand, Außenradius, äußere Abmessung) der Drückstollen (oder: deren äußerer oder (radial) nach außen zeigender Oberfläche) von der Werkzeugachse mit steigendem axialem Abstand von einem Werkzeugende (oder: Stirnseite des Werkzeugs) bezüglich der Werkzeugachse gemäß einer vorgegebenen monoton wachsenden Ausdehnungsfunktion der radialen Ausdehnung abhängig von der axialen Position der Drückstollen zu. Damit nimmt auch das resultierende Eindrückvolumen oder verdrängte Volumen im Gewindegang im Werkstück zu, das Gewinde wird also durch die in ihrem radialen Abstand zunehmenden Drückstollen sukzessive weiter ausgeformt. Diese radiale Ausdehnungsfunktion für die Drückstollen oder Zunahme oder Differenz des radialen Abstandes der Drückstollen (oder: Umformhöhe, radiale Zustellung) im Anfurchbereich wird nun abhängig von dem Werkstoff des Werkstücks gewählt oder eingestellt. Dadurch wird die Leistung des Werkzeugs gesteigert.

In einer zweiten Variante ist das Werkzeug an den Werkstoff des Werkstücks angepasst, indem der radiale Abstand eines in einer Vorschubrichtung des Drückstollens relativ zum Werkstück verlaufenden zentralen Drücksteges, der den radial am weitesten nach außen ragenden Bereich des Drückstollens bildet und oder sich im Wesentlichen auf den Gewindegrund des erzeugten Gewindes im Werkstück abbildet, entgegen der Vorschubrichtung gemäß einer vorgegebenen radialen Abstandsfunktion bis zu einem maximalen radialen Abstand monoton zunimmt und diese radiale Abstandsfunktion des Drücksteges jedes Drückstollens abhängig von dem Werkstoff des Werkstücks gewählt ist. Mit anderen Worten werden also die zur Drückstollenspitze ansteigenden Seitenbereiche der Drückstege in ihrem Anstieg an das zu bearbeitende Material angepasst. Dadurch kann die radiale Fließkomponente des Werkstückwerkstoffs beim Einformen des Gewindes beeinflusst werden, insbesondere zur Berücksichtigung hoher Umformkräfte und/oder des Fließvermögens und/oder der Adhäsion des zu bearbeitenden Materials.

In einer dritten Variante schließlich werden die in Eingriff oder in Kontakt mit dem Werkstück kommenden Drückflächen der Drückstollen in Gestalt und/oder Größe und/oder Anordnung abhängig von dem Werkstoff des Werkstücks gewählt. Dadurch kann insbesondere die Adhäsion oder Materialhaftung des Werkstückwerkstoffes berücksichtigt werden.

Eine radiale Richtung ist dabei als senkrecht zur Werkzeugachse durch diese oder von dieser weg verlaufend definiert und eine axiale Richtung ist als entlang der oder parallel zur Werkzeugachse verlaufend definiert.

Unter monoton zunehmend wird eine Funktion verstanden, die zumindest abschnittsweise oder in Stufen oder auch kontinuierlich (streng monoton) zunimmt.

Als geometrische Parameter oder Merkmale zur Anpassung des Werkzeugs an de Werkstückwerkstoff sind also gemäß der Erfindung zumindest die Umformhöhe in einem Einlaufbereich oder Anfurchbereich, die Drücksteggestaltung der Drückstollen und die Drückflächen (oder: Kontaktflächen, Berührflächen) der Drückstollen allein oder in beliebiger Kombination vorgesehen. Man erhält so eine Auswahl von unterschiedlich gestalteten Gewindeformwerkzeugen für unterschiedliche Werkstückmaterialien.

Gemäß Anspruch 1 wird deshalb ein Set oder eine Auswahl von mehreren unterschiedlichen Werkzeugen bereitgestellt oder vorgesehen, die gemäß der Erfindung für unterschiedliche Werkstoffeigenschaftsbereiche oder unterschiedliche Werkstoffe oder Werkstofftypen oder Werkstoffklassen ausgelegt sind.

Mit dem Verfahren gemäß Patentanspruch 13 werden
a) wenigstens ein erstes Gewinde in einem ersten Werkstück aus einem ersten Werkstoff mit einem ersten Werkzeug nach der Erfindung, das an den ersten Werkstoff angepasst ist, und
b) wenigstens ein zweites Gewinde in einem zweiten Werkstück aus einem zweiten Werkstoff mit einem zweiten Werkzeug nach der Erfindung, das an den zweiten Werkstoff angepasst ist, erzeugt.

Das Werkzeug kann aber auch in weiteren Parametern oder Eigenschaften an den zu bearbeitenden Werkstoff angepasst werden. Diese und weitere Ausführungsformen sind Gegenstand eines Teils der vom Patentanspruch 1 abhängigen Patentansprüche.

So können zusätzlich der Werkstoff des Werkzeugs zumindest im Bereich der Drückstollen, insbesondere hinsichtlich Verschleißbeständigkeit und/oder Zähigkeit, und/oder der Werkstoff einer Oberflächenschicht auf dem Werkzeug zumindest im Bereich der Drückstollen, insbesondere hinsichtlich Gleitreibung, Härte und/oder Wärmefestigkeit, und/oder die Form, insbesondere Querschnittsform der Drückstege, insbesondere deren radiale Krümmung senkrecht zur in Vorschubrichtung, an den Werkstoff des Werkstücks angepasst werden.

In einer vorteilhaften Ausführungsform wird die Zahl der Drückstollen am Umfang oder in einer Anordnung um die Werkzeugachse, insbesondere die Polygoneckenzahl bei einer polygonalen Grundform, an den Werkstoff des Werkstücks angepasst. Diese Ausführungsform ist vorzugsweise zum Einstellen der radialen Ausdehnungsfunktion im Einlauf- oder Anfurchbereich geeignet, indem bei, in der Regel von der konkreten Anwendung, vorgegebener Länge des Einlauf- oder Anfurchbereichs und vorgegebener Gewindesteigung durch eine größere Anzahl von Drückstollen die Differenz(en) in den radialen Ausdehnungen benachbarter Drückstollen oder die Umformhöhe verkleinert oder umgekehrt bei kleinerer Anzahl vergrößert wird.

Die Anpassung des Werkzeugs an den Werkstoff des Werkstücks erfolgt vorzugsweise hinsichtlich einer oder mehrerer der folgenden Werkstoffeigenschaften des Werkstücks:
- Fließeigenschaften, insbesondere Fließvermögen oder Zähigkeit oder plastisches Formänderungsvermögen
- Abrasivität oder Verschleißfestigkeit
- Adhäsion oder Materialhaftung

In einer besonders vorteilhaften Ausführungsform wird für Werkstückmaterialien mit einem höheren Fließvermögen eine Ausdehnungsfunktion der Drückstollen und/oder eine Abstandsfunktion der Drückstege mit einer, zumindest im Mittel, größeren Steigung (oder: größeren ersten Ableitung oder größerem Gradienten) bezüglich des axialen Abstandes oder axialen Position eingestellt als für ein Werkstückmaterial mit einem geringeren Fließvermögen, zumindest falls der Unterschied im Fließvermögen der beiden Materialien größer ist als ein vorgegebener Mindestwert oder ausreichend groß ist.

In einer weiteren besonders vorteilhaften Ausführungsform wird für einen Werkstoff des Werkstücks mit einer höheren Adhäsion an der Oberfläche der Drückstollen die Drückflächen der Drückstollen kleiner und/oder die Steigung der radialen Abstandsfunktion der Drückstege größer gewählt als für einen Werkstoff des Werkstücks mit einer niedrigeren Adhäsion, zumindest wenn der Unterschied in der Adhäsion der beiden Werkstoffe größer ist als ein vorgegebener Mindestwert, d.h. ausreichend groß ist.

Auch um den Freiheitsgrad bei der Gestaltung der Drückstege beizubehalten, werden die Drückflächen vorzugsweise an den Flankenbereichen der Drückstollen (Drückflanken) abhängig vom Werkstückmaterial variiert, also den Bereichen, die sich senkrecht zur Vorschubrichtung des Drückstollens relativ zum Werkstück an den zentralen Drücksteg seitlich anschließen und/oder sich im Wesentlichen auf die Gewindeflanken des erzeugten Gewindes abbilden. Insbesondere kann hier der Querschnitt senkrecht zur Vorschubrichtung der Drückstollen teilweise verringert werden. So kann beispielsweise im Bereich der höchsten Erhebung (Drückstollenspitze) der Drückstege oder bei der maximalen radialen Ausdehnung der Drückstollen an den Flankenbereichen Material fehlen, insbesondere abgetragen, vorzugsweise abgeschliffen, sein, vorzugsweise in Gestalt eines sich radial nach außen erweiternden Bereiches, vorzugsweise eines Dreiecks, der entweder bis zum Grund der Flankenbereiche radial nach innen sich erstrecken kann oder auch noch in den Flankenbereichen endet und dann über einen linearen Steg radial nach innen weiter verläuft. Diese Maßnahme der Reduzierung an den Flankenbereichen ist mit der Drückstollengestaltung hinsichtlich deren Stabilität besonders bei hohen Umformkräften abzustimmen.

Besonders vorteilhaft ist eine Einteilung der Werkzeuge nach wenigstens zwei, vorzugsweise wenigstens drei, Kategorien bezüglich der werkstoffabhängigen Parameter oder Eigenschaften, insbesondere bezüglich der Steigung der radialen Ausdehnungsfunktion der Drückstollen, der Steigung der radialen Abstandsfunktion der Drückstege und der Größe der Drückflächen der Drückstollen. Jeder dieser Kategorien ist wenigstens ein einzustellender Wert oder Wertebereich zugeordnet, so dass sich wenigstens eine unterste Kategorie mit wenigstens einem niedrigsten Wert oder mit einem niedrigsten Wertebereich, vorzugsweise wenigstens eine mittlere Kategorie mit wenigstens einem mittleren Wert oder mit einem mittleren Wertebereich, und wenigstens eine oberste Kategorie mit wenigstens einem höchsten Wert oder mit einem höchsten Wertebereich ergibt.

Für einzelne häufig bearbeitete Werkstoffe können dabei die Kategorien und/oder die Wertebereiche wie folgt gewählt werden:
1. Aluminium-Knetlegierung:
   a) Steigung der radialen Abstandsfunktion der Drückstege:
      oberste Kategorie und/oder Wertebereich von 45 % bis 100 % über einem Abstands-Basiswert (also das 1,45 bis 2 fache des Basiswertes)
   b) Größe der Drückflächen der Drückstollen:
      unterste Kategorie und/oder Wertebereich von 0 % bis 50 % über einem Flächen-Basiswert (also das 1 bis 1,5 fache des Basiswertes)
   c) vorzugsweise
      Steigung der radialen Ausdehnungsfunktion der Drückstollen oder Umformhöhe: mittlere oder obere oder oberste Kategorie und/oder Wertebereich von 50 % bis 100 % über einem Ausdehnungs-Basiswert (oder: Umformhöhen-Basiswert)
2. Aluminium-Gusslegierung mit Siliciumanteil:
   a) Steigung der radialen Abstandsfunktion der Drückstege:
      untere oder unterste Kategorie und/oder Wertebereich von 0 % bis 55 % über dem Abstands-Basiswert
   b) Größe der Drückflächen der Drückstollen:
      obere oder oberste Kategorie und/oder Wertebereich von 50 % bis 100 % über dem Flächen-Basiswert
   c) Steigung der radialen Ausdehnungsfunktion der Drückstollen oder Umformhöhe:
      unteren oder der unterste Kategorie und/oder Wertebereich von 5 % bis 55 % über dem Ausdehnungs-Basiswert
3. schlecht fließender, abrasiver Stahlwerkstoff wie H-Stahlwerkstoff:
   a) Steigung der radialen Abstandsfunktion der Drückstege:
      untere oder unterste Kategorie und/oder Wertebereich von 0 % bis 55 % über dem Abstands-Basiswert
   b) Größe der Drückflächen der Drückstollen:
      obere oder oberste Kategorie und/oder Wertebereich von 50 % bis 100 % über dem Flächen-Basiswert
   c) Steigung der radialen Ausdehnungsfunktion der Drückstollen oder Umformhöhe: untere oder unterste Kategorie und/oder Wertebereich von 0 % bis 50 % über dem Ausdehnungs-Basiswert
4. gut fließender Stahlwerkstoff wie ST-Stahlwerkstoff:
   a) Steigung der radialen Abstandsfunktion der Drückstege:
      mittlere oder obere Kategorie und/oder Wertebereich von 35 % bis 85 % über dem Abstands-Basiswert
   b) Größe der Drückflächen der Drückstollen:
      obere Kategorie und/oder Wertebereich von 40 % bis 90 % über dem Flächen-Basiswert
   c) Steigung der radialen Ausdehnungsfunktion der Drückstollen oder Umformhöhe:
      mittlere Kategorie und/oder Wertebereich von 30 % bis 80 % über dem Ausdehnungs-Basiswert
5. rostfreier Stahlwerkstoff wie VA-Stahl:
   a) Steigung der radialen Abstandsfunktion der Drückstege:
      mittlere oder obere Kategorie und/oder Wertebereich von 25 % bis 80 % über dem Abstands-Basiswert
   b) Größe der Drückflächen der Drückstollen:
      untere oder unterste Kategorie und/oder Wertebereich von 0 % bis 50 % über dem Flächen-Basiswert
   c) Steigung der radialen Ausdehnungsfunktion der Drückstollen oder Umformhöhe:
      untere oder mittlere Kategorie und/oder Wertebereich von 5 % bis 60 % über dem Ausdehnungs-Basiswert
6. zäher, hochfester Stahlwerkstoff wie Z-Stahl oder Z-Stahllegierung:
   a) Steigung der radialen Abstandsfunktion der Drückstege:
      mittlere oder obere Kategorie und/oder Wertebereich von 40 % bis 95 % über dem Abstands-Basiswert
   b) Größe der Drückflächen der Drückstollen:
      mittlere Kategorie und/oder Wertebereich von 30 % bis 80 % über dem Flächen-Basiswert
   c) Steigung der radialen Ausdehnungsfunktion der Drückstollen oder Umformhöhe:
      mittlere oder obere Kategorie und/oder Wertebereich von 45 % bis 95 % über dem Ausdehnungs-Basiswert
7. weicher Stahlwerkstoff wie W-Stahl:
   a) Steigung der radialen Abstandsfunktion der Drückstege:
      obere oder oberste Kategorie und/oder Wertebereich von 45 % bis 100 % über dem Abstands-Basiswert
   b) Größe der Drückflächen der Drückstollen:
      untere oder unterste Kategorie und/oder Wertebereich von 0 % bis 55 % über dem Flächen-Basiswert
   c) Steigung der radialen Ausdehnungsfunktion der Drückstollen oder Umformhöhe:
      obere oder oberste Kategorie und/oder Wertebereich von 50 % bis 100 % über dem Ausdehnungs-Basiswert

Die jeweiligen Basiswerte werden empirisch vorab bestimmt abhängig von dem Gewindeprofil des zu erzeugenden Gewindes und den vorgesehenen Werkstoffen des Werkstücks.

Die radiale Ausdehnungsfunktion der Drückstollen und/oder die radiale Abstandsfunktion der Drückstege sind vorzugsweise in allen Ausführungsformen streng monoton wachsend, d.h. die Steigung ist immer größer null.

Besonders bevorzugt ist eine lineare radiale Ausdehnungsfunktion, was einem konischen Anfurchbereich oder Arbeitsbereich entspricht. Eine solche Ausführungsform ist leicht fertigbar. Hier wird bevorzugt dann die Umformhöhe, also die Differenz von Anfangswert und Endwert der Ausdehnungsfunktion im Anlauf- oder Anfurchbereich oder ganzen Arbeitsbereich als werkstoffabhängiger Parameter gewählt, da der Verlauf der Ausdehnungsfunktion dann schon aufgrund der Linearität festgelegt ist.

Die radiale Ausdehnungsfunktion kann aber auch eine Funktion aus der eine rationale oder gebrochen rationale Funktion n-ter Ordnung, eine Wurzel- oder Potenzfunktion, eine Exponentialfunktion oder eine logarithmische Funktion, oder eine Spiralfunktion, z.B. eine archimedische oder logarithmische Spirale oder eine, insbesondere durch Lagrange'sche Interpolationspolynome oder Spline-Funktionen, interpolierte Funktion umfassenden Gruppe von Funktionen sein.

Die Erfindung wird bevorzugt bei axial arbeitenden Gewindefurchern mit entlang einem Gewinde unter einer Gewindesteigung angeordneten Drückstollen eingesetzt, kann aber ebenso bei Zirkulargewindeformern zum Einsatz kommen.

In einer Weiterbildung sind am Umfang des Werkzeugs in Längsrichtung verlaufende Nuten oder im Innern des Werkzeugs wenigstens ein Kanal vorgesehen zur Führung eines fluiden Mediums, insbesondere eines Kühl - und/oder Schmiermittels. Beim Gewindeerzeugungsprozess kann sich der Arbeitsbereich durch die Reibung zwischen dem Werkzeug und der Oberfläche des Werkstücks stark erwärmen. Um die Reibung und/oder die Wärmeentwicklung zu reduzieren und die entstehende Wärme abzuführen kann dann ein Kühl- und/oder Schmiermittel in den Nuten vom Werkzeugschaft an die Spitze des Werkzeugs geführt werden und von dort aus den Arbeitsbereich überströmen. Die in Längsrichtung verlaufenden Nuten oder Kanäle können gerade oder gedrallt bzw. mit einer Drehung um den Umfang des Werkzeugs ausgebildet sein.

Weitere Ausführungsbeispiele ergeben sich aus der nachstehenden

**Tabelle 1**

| | | Gestaltung | | |
|---|---|---|---|---|
| Werkstückmaterial | Haupteinfluss auf Funktion des Werkzeugs | Geometrie | Substrat | Beschichtung |
| AL (Knetaluminium) | Hohe Adhäsion, gutes Fließverhalten, niedrige Umformkräfte | sehr hohe Steigung der Abstandsfunktion des Drücksteges oder sehr steiles Polygons oder sehr steiler Furchzahn (bewirkt starke radiale Fließkomponente gegen Adhäsion), kleinste Furchfläche (keine Angriffsfläche für Adhäsion),große Umformhöhe (einfaches und konstantes Fließen bei akzeptablen Umformkräften) | niedrige Anforderungen | Sehr gute Gleiteigenschaften |
| GAL (Gussaluminium, siliziumhaltig) | Ungünstiges Fließverhalten (schlechte WerkstückOberfläche), niedrige Umformkräfte, Abrasiv | niedrige Steigung der Abstandsfunktion des Drücksteges oder flaches Polygons oder flacher Furchzahn (moderates radiales Fließen), größere Furchfläche (Nachglätten), niedrige Umformhöhe (stabiler Fließprozess ohne Aufreißen des Werkstoffes) | Verschleißbeständigkeit, hohe Härte | Hohe Härte |
| H (schlecht fließende StahlWerkstoffe) | Ungünstiges Fließverhalten (schlechte WerkstückOberfläche), mittlere Umformkräfte, Abrasiv | niedrige Steigung der Abstandsfunktion des Drücksteges oder flaches Polygons oder flacher Furchzahn (moderates radiales Fließen), größere Furchfläche (Nachglätten), niedrige Umformhöhe (stabiler Fließprozess ohne Aufreißen des Werkstoffes) | Verschleißbeständigkeit, hohe Härte | Hohe Härte |
| ST (Stahl allgemeiner Anwendung) | Günstiges Fließverhalten, hohe Umformkräfte | hohe Steigung der Abstandsfunktion des Drücksteges oder steiles Polygons oder steiler Furchzahn (radiale Fließkomponente), größere Furchfläche (mechanisch stabiler | Verschleißbeständigkeit und Zähigkeit | Hohe Härte und Warmfestigkeit |
| | | Furchzahn), mittlere Umformhöhe (gutes Fließen bei akzeptablen Umformkräften) | | |
| VA (Rostfreie Stähle) | Adhäsiv, hohe Umformkräfte | hohe Steigung der Abstandsfunktion des Drücksteges oder steiles Polygons oder steiler Furchzahn (radiale Fließkomponente), größere Furchfläche (Vermeidung von Adhäsion und Reduzierung der Klemmreibung am Zahn), kleine bis mittlere Umformhöhe (nicht zu große Umformhöhen bei akzeptablen Umformkräften) | Verschleißbeständigkeit und Zähigkeit | Gute Gleiteigenschaften, hohe Härte und Warmfestigkeit |
| Z (Zähe, hochfeste Stähle und Stahllegierungen) | Sehr hohe Umformkräfte | hohe Steigung der Abstandsfunktion des Drücksteges oder steiles Polygons oder steiler Furchzahn (radiale Fließkomponente), mittlere Furchfläche (mechanische Stabilität und Reduzierung der Reibung am Furchzahn), mittlere bis hohe Umformhöhe (Reduzierung der Gesamtreibung aller Zähne) | Höchste Verschleißbeständigkeit und Zähigkeit | Höchste Härte und Warmfestigkeit |
| W (Weiche Stahlwerkstoffe niedriger Festigkeit) | Günstiges Fließverhalten, niedrige Umformkräfte | hohe bis sehr hohe Steigung der Abstandsfunktion des Drücksteges oder steiles bis sehr steiles Polygons oder steiler bis sehr steiler Furchzahn (starke radiale Fließkomponente), kleine Furchfläche (reduzierte Reibung, Stabilität nicht erforderlich aufgrund niedriger Umformkräfte), hohe Umformung (einfaches und konstantes Fließen bei akzeptablen Umformkräften) | niedrige Anforderungen | Hohe Härte |

Vorteilhafte Zahlenwerte für die einzustellenden Kategorien für die Umformhöhe (Anstieg oder Differenz der radialen Ausdehnungsfunktion über den Anfurchbereich oder Arbeitsbereich) Uh, die Steigung der radialen Abstandsfunktion SF der Formkeile sowie die Drückflächen der Formkeile As abhängig von den schon genannten Werkstoffen AL, GAL, H, ST, VA, Z und W ergeben sich
(i) aus den Ausführungsbeispielen gemäß der folgenden

**Tabelle 2**

| | | Uh min | % max | SF min | % max | As min | % max |
|---|---|---|---|---|---|---|---|
| AL | | 50 | 100 | 45 | 100 | 0 | 50 |
| GAL | | 5 | 55 | 0 | 55 | 50 | 100 |
| H | | 0 | 50 | 0 | 55 | 50 | 100 |
| ST | | 30 | 80 | 35 | 85 | 40 | 90 |
| VA | | 5 | 60 | 25 | 80 | 0 | 50 |
| Z | | 45 | 95 | 40 | 95 | 30 | 80 |
| W | | 50 | 100 | 45 | 100 | 0 | 55 |

in Form von relativen Werten in Prozent über dem niedrigsten Wert oder Basiswert, der demzufolge bei 0 % liegt, und den zugehörigen Diagrammen der FIG 1 bis 3, wobei min der Minimalwert und max der Maximalwert bedeuten,
und
(ii) aus den Ausführungsbeispielen gemäß der folgenden Tabelle 3 in Form von absoluten Wertebereichen

**Tabelle 3**

| | Uh (mm) für M10 |
|---|---|
| AL | 0,040 bis 0,500 |
| GAL | 0,025 bis 0,030 |
| H | 0,025 bis 0,030 |
| ST | 0,030 bis 0,040 |
| VA | 0,030 bis 0,040 |
| Z | 0,035 bis 0,045 |
| W | 0,040 bis 0,050 |

bezogen auf einen Gewindefurcher mit einem Durchmesser von 10 mm. Für einen anderen Durchmesser des Werkzeugs sind die Werte entsprechend anzupassen. Die Anfurchbereiche sind in diesem Ausführungsbeispiel jeweils konisch gewählt, weisen also eine lineare radiale Ausdehnungsfunktion für die aufeinanderfolgenden Drückstollen auf.

FIG 1 zeigt in einem Diagramm die Steigung SF der radialen Abstandsfunktion der Drückstege der Drückstollen aufgetragen in Abhängigkeit der sieben Werkstückmaterialien AL, GAL, H, ST, VA, Z und W in Prozent

FIG 2 zeigt in einem Diagramm die (wirksame) Drückfläche As der Drückstollen aufgetragen in Abhängigkeit der sieben Werkstückmaterialien AL, GAL, H, ST, VA, Z und W in Prozent

FIG 3 zeigt in einem Diagramm die Umformhöhe Uh, also die maximale Differenz der Werte der radialen Ausdehnungsfunktion im Anfurchbereich von dessen äußerstem zum innersten Bereich, in Abhängigkeit der sieben Werkstückmaterialien AL, GAL, H, ST, VA, Z und W in Prozent. Dabei wird wieder von einem konischen Anfurchbereich, also einer linearen radialen Ausdehnungsfunktion, ausgegangen.

In den FIG 1 bis 3 bedeuten die senkrechten Linien die Wertebereiche zwischen Minimalwert min und Maximalwert max.

FIG 4 zeigt einen Gewindefurcher 2 in einem Längsschnitt mit einem Anlaufbereich 20 und einem Kalibierbereich 21. Der Anlaufbereich 20 umfasst drei Formzähne oder Drückstollen 3, 4 und 5. Im Kalibierbereich 21 ist nur ein Drückstollen 6 dargestellt. Im Kalibierbereich 21 bleibt die radiale Ausdehnung der Drückstollen, d.h. deren radialer Abstand der Drückstollenspitzen oder Zahnköpfe von der zentralen Werkzeugachse A konstant. In dem Anlaufbereich 20 nimmt der radiale Abstand der Drückstollen 3, 4 und 5 von der Werkzeugachse A entgegen der Vorschubrichtung oder von dem Ende des Gewindefurchers 2 weg kontinuierlich zu und zwar, wie in FIG 4 gezeigt, gemäß einer linearen Zunahme in dem kegelförmigen Bereich des Anlaufbereichs 20, dessen Länge mit l bezeichnet ist. Die gesamte Umformhöhe Uh zwischen dem Drückstollen 3 mit der geringsten radialen Ausdehnung und dem Drückstollen 5 mit der größten radialen Ausdehnung ist eingezeichnet. Ferner sind die Formflächen As der Drückstollen 3 bis 6 und die Steigung SF der radialen Abstandsfunktion der Drückstege der Drückstollen angedeutet.

Ohne Einschränkung der Allgemeinheit kann das Werkzeug in der angegebenen Weise (auch) an folgende Werkstoffe angepasst werden:
- verschiedene Stahlwerkstoffe mit einer Festigkeit bis ca. 1400 N/mm²
- Gusswerkstoffe insbesondere Gusseisen und Gusseisen mit Graphit
- Kupfer, Kupferlegierungen, insbesondere Messing und Bronze und Wolfram-Kupfer-Legierungen
- Nickel-/Kobalt-Legierungen
- Aluminiumlegierungen, wie Aluminium-Knetlegierungen und Aluminium-Gusslegierungen mit unterschiedlichem Siliciumgehalt (GAL)
- Magnesiumlegierungen, insbesondere Magnesium-Knetlegierungen oder Magnesium-Gusslegierungen
- Titan und Titanlegierungen
- Kunststoffe, insbesondere Duroplaste, Thermoplaste und faserverstärkte Kunststoffe
- Graphit
   und/oder
- H Hochfeste Werkstoffe, schlechtes Fließverhalten
- W Weiche Werkstoffe, insbesondere weiche Stahlwerkstoffe niedriger Festigkeit
- Z Zähe Werkstoffe, insbesondere zähe und hochfeste Stähle und Stahllegierungen, sehr hohe Umformkräfte
- VA Rostfreie Stähle, hohe Adhäsion, hohe Umformkräfte
- ST Stähle allgemeiner Anwendung, günstiges Fließverhalten, hohe Umformkräfte
- AL Knetaluminium, hohe Adhäsion, gutes Fließverhalten, niedrige Umformkräfte

## Patentansprüche

1. Set von mehreren unterschiedlichen Werkzeugen zur Erzeugung
von Gewinden in oder für unterschiedliche(n) Werkstoffe(n), wobei jedes der Werkzeuge
a) um eine Werkzeugachse drehbar ist und
b) mehrere axial versetzt zueinander angeordneten Drückstollen zum Eindrücken des Gewindes in eine Werkstückoberfläche eines Werkstücks umfasst,
c) und wobei jedes der Werkzeuge an den Werkstoff des Werkstücks angepasst ist,
cl) indem zumindest bei einem Teil der Drückstollen, insbesondere in einem Einlauf- oder Anfurchbereich, die maximale radiale Ausdehnung der axial versetzten Drückstollen gemäß einer vorgegebenen, mit steigendem axialem Abstand von einem Werkzeugende monoton wachsenden radialen Ausdehnungsfunktion zunimmt und die radiale Ausdehnungsfunktion für die Drückstollen abhängig von dem Werkstoff des Werkstücks gewählt ist
und/oder
c2) indem der radiale Abstand eines in einer Vorschubrichtung des Drückstollens relativ zum Werkstück verlaufenden zentralen Drücksteges, der den radial am weitesten nach außen ragenden Bereich des Drückstollens bildet und oder sich im Wesentlichen auf den Gewindegrund des erzeugten Gewindes im Werkstück abbildet, entgegen der Vorschubrichtung gemäß einer vorgegebenen radialen Abstandsfunktion bis zu einem maximalen radialen Abstand monoton zunimmt und diese radiale Abstandsfunktion des Drücksteges jedes Drückstollens abhängig von dem Werkstoff des Werkstücks gewählt ist,
und/oder
c3) indem die in Eingriff oder in Berührung mit dem Werkstück kommenden Drückflächen der Drückstollen in Gestalt und/oder Größe und/oder Anordnung abhängig von dem Werkstoff des Werkstücks gewählt sind,
d) wobei radial als senkrecht zur Werkzeugachse und axial als entlang der oder parallel zur Werkzeugachse definiert sind.

2. Werkzeugset nach Anspruch 1, bei dem
a) für einen Werkstoff des Werkstücks mit einem höheren Fließvermögen eine radiale Ausdehnungsfunktion der Drückstollen und/oder eine radiale Abstandsfunktion der Drückstege mit einer, zumindest im Mittel, größeren Steigung gewählt sind bzw. ist als für einen Werkstoff des Werkstücks mit einem geringeren Fließvermögen, zumindest wenn der Unterschied im Fließvermögen der beiden Werkstoffe größer ist als ein vorgegebener Mindestwert und/oder
b) bei dem die radiale Ausdehnungsfunktion der Drückstollen und/oder die radiale Abstandsfunktion der Drückstege streng monoton wachsend sind bzw. ist
und/oder
c) bei dem die radiale Ausdehnungsfunktion und/oder die radiale Abstandsfunktion eine Funktion aus der eine lineare Funktion, eine rationale oder gebrochen rationale Funktion n-ter Ordnung, eine Wurzel- oder Potenzfunktion, eine Exponentialfunktion oder eine logarithmische Funktion, eine Spiralfunktion, insbesondere eine logarithmische oder archimedische Spirale, oder eine, insbesondere durch Lagrange'sche Interpolationspolynome oder Spline-Funktionen, interpolierte Funktion umfassenden Gruppe von Funktionen ist.

3. Werkzeugset nach einem der vorhergehenden Ansprüche, bei dem
a) jeder Drückstollen Flankenbereiche aufweist, die senkrecht zur Vorschubrichtung des Drückstollens relativ zum Werkstück von einem oder dem zentralen Drücksteg seitlich in ihrem radialen Abstand abfallen und/oder sich im Wesentlichen auf die Gewindeflanken des erzeugten Gewindes abbilden, wobei die Anordnung und/oder Gestalt und/oder Größe der Drückflächen an den Flankenbereichen abhängig von dem Werkstoff des Werkstücks gewählt oder eingestellt sind
und/oder
b) die Form, insbesondere Querschnittsform, der Drückstege, insbesondere deren radiale Krümmung senkrecht zur Vorschubrichtung der Drückstollen, an den Werkstoff des Werkstücks angepasst ist und/oder
c) bei dem die Drückstollen in einer die Werkzeugachse spiralförmig oder schraubenförmig umlaufenden Anordnung aufeinanderfolgend angeordnet sind oder an einem radial nach außen ausgebildeten, die Werkzeugachse spiralförmig oder schraubenförmig umlaufenden Gewindeformprofil ausgebildet sind.

4. Werkzeugset nach einem der vorhergehenden Ansprüche, bei dem für einen Werkstoff des Werkstücks mit einer höheren Adhäsion an der Oberfläche der Drückstollen die Drückflächen der Drückstollen kleiner und/oder die Steigung der radialen Abstandsfunktion der Drückstege größer gewählt sind als für einen Werkstoff des Werkstücks mit einer niedrigeren Adhäsion, zumindest wenn der Unterschied in der Adhäsion der beiden Werkstoffe größer ist als ein vorgegebener Mindestwert.

5. Werkzeugset nach einem der vorhergehenden Ansprüche, bei dem für eine vorgegebene Auswahl von Werkstoffen des Werkstücks die Steigung der radialen Ausdehnungsfunktion der Drückstollen oder die Umformhöhe, die Steigung der radialen Abstandsfunktion der Drückstege und die Größe der Drückflächen der Drückstollen jeweils in wenigstens zwei Kategorien hinsichtlich der einzustellenden Werte unterteilt sind, umfassend wenigstens eine unterste Kategorie mit wenigstens einem niedrigsten Wert oder mit einem niedrigsten Wertebereich und wenigstens eine oberste Kategorie mit wenigstens einem höchsten Wert oder mit einem höchsten Wertebereich.

6. Werkzeugset nach Anspruch 5, bei der wenigstens eine mittlere Kategorie als dritte Kategorie mit wenigstens einem mittleren Wert oder mit einem mittleren Wertebereich vorgesehen ist.

7. Werkzeugset nach Anspruch 5 oder Anspruch 6, bei dem
a) bei einer Aluminium-Knetlegierung (AL) als Werkstoff des Werkstücks die Steigung der radialen Abstandsfunktion der Drückstege aus der obersten Kategorie gewählt ist und die Größe der Drückflächen der Drückstollen aus der untersten Kategorie gewählt ist und vorzugsweise auch die Steigung der radialen Ausdehnungsfunktion der Drückstollen oder die Umformhöhe aus einer mittleren oder einer oberen oder der obersten Kategorie gewählt ist und/oder
b) bei einer Aluminium-Gusslegierung mit Siliciumanteil (GAL) als Werkstoff des Werkstücks die Steigung der radialen Abstandsfunktion der Drückstege aus einer unteren oder der untersten Kategorie gewählt ist und die Größe der Drückflächen der Drückstollen aus einer oberen oder der obersten Kategorie gewählt ist und die Steigung der radialen Ausdehnungsfunktion der Drückstollen oder die Umformhöhe aus einer unteren oder der untersten Kategorie gewählt ist
und/oder
c) bei einem schlecht fließenden, abrasiven Stahlwerkstoff wie einem H-Stahlwerkstoff als Werkstoff des Werkstücks die Steigung der radialen Abstandsfunktion der Drückstege aus einer unteren oder der untersten Kategorie gewählt ist und die Größe der Drückflächen der Drückstollen aus einer oberen oder der obersten Kategorie gewählt ist und die Steigung der radialen Ausdehnungsfunktion der Drückstollen oder die Umformhöhe aus einer unteren oder der untersten Kategorie gewählt ist,
und/oder
d) bei einem gut fließenden Stahlwerkstoff wie einem ST-Stahlwerkstoff als Werkstoff des Werkstücks die Steigung der radialen Abstandsfunktion der Drückstege aus einer mittleren oder einer oberen Kategorie gewählt ist und die Größe der Drückflächen der Drückstollen aus einer oberen Kategorie gewählt ist und die Steigung der radialen Ausdehnungsfunktion der Drückstollen oder die Umformhöhe aus einer mittleren Kategorie gewählt ist und/oder
e) bei dem bei einem rostfreien Stahlwerkstoff wie einem VA-Stahl als Werkstoff des Werkstücks die Steigung der radialen Abstandsfunktion der Drückstege aus einer mittleren oder einer oberen Kategorie gewählt ist und die Größe der Drückflächen der Drückstollen aus einer unteren oder der untersten Kategorie gewählt ist und die Steigung der radialen Ausdehnungsfunktion der Drückstollen oder die Umformhöhe aus einer unteren oder einer mittleren Kategorie gewählt ist
und/oder
f) bei einem zähen, hochfesten Stahlwerkstoff wie einem Z-Stahl oder einer Z-Stahllegierung als Werkstoff des Werkstücks die Steigung der radialen Abstandsfunktion der Drückstege aus einer mittleren oder oberen Kategorie gewählt ist und die Größe der Drückflächen der Drückstollen aus einer mittleren Kategorie gewählt ist und die Steigung der radialen Ausdehnungsfunktion der Drückstollen oder die Umformhöhe aus einer mittleren oder einer oberen Kategorie gewählt ist
und/oder
g) bei einem weichen Stahlwerkstoff wie einem W-Stahl als Werkstoff des Werkstücks die Steigung der radialen Abstandsfunktion der Drückstege aus einer oberen oder der obersten Kategorie gewählt ist und die Größe der Drückflächen der Drückstollen aus einer unteren oder der untersten Kategorie gewählt ist und die Steigung der radialen Ausdehnungsfunktion der Drückstollen oder die Umformhöhe aus einer oberen oder der obersten Kategorie gewählt ist.

8. Werkzeugset nach einem der vorhergehenden Ansprüche, bei dem
a) bei einer Aluminium-Knetlegierung (AL) als Werkstoff des Werkstücks die Steigung der radialen Abstandsfunktion der Drückstege aus einem Bereich von 45 % bis 100 % über einem Basiswert gewählt ist und/oder die Größe der Drückflächen der Drückstollen aus einem Bereich von 0 % bis 50 % über einem Basiswert gewählt ist und vorzugsweise auch die Steigung der radialen Ausdehnungsfunktion der Drückstollen oder die Umformhöhe aus einem Bereich von 50 % bis 100 % über einem Basiswert gewählt ist
und/oder
b) bei einer Aluminium-Gusslegierung mit Siliciumanteil (GAL) als Werkstoff des Werkstücks die Steigung der radialen Abstandsfunktion der Drückstege aus einem Bereich von 0 % bis 55 % über einem Basiswert gewählt ist und die Größe der Drückflächen der Drückstollen aus einem Bereich von 50 % bis 100 % über einem Basiswert gewählt ist und die Steigung der radialen Ausdehnungsfunktion der Drückstollen oder die Umformhöhe aus einem Bereich von 5 % bis 55 % über einem Basiswert gewählt ist
und/oder
c) bei einem schlecht fließenden, abrasiven Stahlwerkstoff wie einem H-Stahlwerkstoff als Werkstoff des Werkstücks die Steigung der radialen Abstandsfunktion der Drückstege aus einem Bereich von 0 % bis 55 % über einem Basiswert gewählt ist und die Größe der Drückflächen der Drückstollen aus einem Bereich von 50 % bis 100 % über einem Basiswert gewählt ist und die Steigung der radialen Ausdehnungsfunktion der Drückstollen oder die Umformhöhe aus einem Bereich von 0 % bis 50 % über einem Basiswert gewählt ist,
und/oder
d) bei einem gut fließenden Stahlwerkstoff wie einem ST-Stahlwerkstoff als Werkstoff des Werkstücks die Steigung der radialen Abstandsfunktion der Drückstege aus einem Bereich von 35 % bis 85 % über einem Basiswert gewählt ist und die Größe der Drückflächen der Drückstollen aus einem Bereich von 40 % bis 90 % über einem Basiswert gewählt ist und die Steigung der radialen Ausdehnungsfunktion der Drückstollen oder die Umformhöhe aus einem Bereich von 30 % bis 80 % über einem Basiswert gewählt ist
und/oder
e) bei dem bei einem rostfreien Stahlwerkstoff wie einem VA-Stahl als Werkstoff des Werkstücks die Steigung der radialen Abstandsfunktion der Drückstege aus einem Bereich von 25 % bis 80 % über einem Basiswert gewählt ist und die Größe der Drückflächen der Drückstollen aus einem Bereich von 0 % bis 50 % über einem Basiswert gewählt ist und die Steigung der radialen Ausdehnungsfunktion der Drückstollen oder die Umformhöhe aus einem Bereich von 5 % bis 60 % über einem Basiswert gewählt ist
und/oder
f) bei einem zähen, hochfesten Stahlwerkstoff wie einem Z-Stahl oder einer Z-Stahllegierung als Werkstoff des Werkstücks die Steigung der radialen Abstandsfunktion der Drückstege aus einem Bereich von 40 % bis 95 % über einem Basiswert gewählt ist und die Größe der Drückflächen der Drückstollen aus einem Bereich von 30 % bis 80 % über einem Basiswert gewählt ist und die Steigung der radialen Ausdehnungsfunktion der Drückstollen oder die Umformhöhe aus einem Bereich von 45 % bis 95 % über einem Basiswert gewählt ist
und/oder
g) bei einem weichen Stahlwerkstoff wie einem W-Stahl als Werkstoff des Werkstücks die Steigung der radialen Abstandsfunktion der Drückstege aus einem Bereich von 45 % bis 100 % über einem Basiswert gewählt ist und die Größe der Drückflächen der Drückstollen aus einem Bereich von 0 % bis 55 % über einem Basiswert gewählt ist und die Steigung der radialen Ausdehnungsfunktion der Drückstollen aus einem Bereich von 50 % bis 100 % über einem Basiswert gewählt ist.

9. Werkzeugset nach einem der vorhergehenden Ansprüche, bei dem der Werkstoff des Werkzeugs zumindest im Bereich der Drückstollen an den Werkstoff des Werkstücks angepasst ist, insbesondere hinsichtlich Verschleißbeständigkeit und/oder Zähigkeit und/oder bei dem eine Oberflächenschicht auf dem Werkzeug zumindest im Bereich der Drückstollen angeordnet ist und der Werkstoff der Oberflächenschicht an den Werkstoff des Werkstücks angepasst ist, insbesondere hinsichtlich Gleitreibung, Härte und/oder Wärmefestigkeit.

10. Werkzeugset nach einem der Ansprüche 1 bis 9, bei dem zumindest ein Teil der Drückstollen im Wesentlichen in einer die Werkzeugachse enthaltenden Ebene aufeinanderfolgend angeordnet sind und/oder bei dem wenigstens zwei Gruppen von mehreren Drückstollen vorgesehen sind, wobei in jeder Gruppe die Drückstollen in einer senkrecht zur Werkzeugachse um die Werkzeugachse verlaufenden Anordnung oder an einem ringförmig oder geschlossen die Werkzeugachse senkrecht zur Werkzeugachse umlaufenden Gewindeformprofil angeordnet sind.

11. Werkzeugset nach einem der Ansprüche 1 bis 9, bei dem die Drückstollen in einer die Werkzeugachse spiralförmig oder schraubenförmig umlaufenden Anordnung aufeinanderfolgend angeordnet sind oder an einem radial nach außen ausgebildeten, die Werkzeugachse spiralförmig oder schraubenförmig umlaufenden Gewindeformprofil ausgebildet sind und oder bei dem jedes Werkzeug an den Werkstoff des Werkstücks angepasst ist, indem die Anzahl der Drückstollen entlang einer Anordnung um die Werkzeugachse und/oder mit der oder zum Einstellen der radial ansteigenden Ausdehnungsfunktion, insbesondere im Einlauf- oder Anfurchbereich, abhängig von dem Werkstoff des Werkstücks gewählt ist.

12. Werkzeugset nach einem der vorhergehenden Ansprüche, das einen Werkzeugkern oder Werkzeugschaft aufweist, wobei die Drückstollen auf einer Außenfläche des Werkzeugkerns oder Werkzeugschafts angeordnet sind, und/oder bei dem am Umfang des Werkzeugs Nuten und/oder im Innern des Werkzeugs Kanäle vorgesehen sind zur Zuführung eines fluiden Mediums, insbesondere eines Kühl- und/oder Schmiermittels.

13. Verfahren zur Erzeugung von Gewinden,
a) bei dem wenigstens ein erstes Gewinde in einem ersten Werkstück aus einem ersten Werkstoff mit einem ersten Werkzeug des Werkzeugsets nach einem der vorhergehenden Ansprüche, das an den ersten Werkstoff angepasst ist, erzeugt wird und
b) bei dem wenigstens ein zweites Gewinde in einem zweiten Werkstück aus einem zweiten Werkstoff mit einem zweiten Werkzeug des Werkzeugsets nach einem der vorhergehenden Ansprüche, das an den zweiten Werkstoff angepasst ist, erzeugt wird.

14. Verfahren nach Anspruch 13, bei dem ein erstes und/oder zweites Werkzeug nach Anspruch 10 verwendet wird und zur Erzeugung des ersten und/oder zweiten Gewindes das erste und/oder zweite Werkzeug um seine Werkzeugachse gedreht wird und gleichzeitig in einer Schraubenbewegung um eine zur Werkzeugachse parallele Mittelachse in eine Vorbohrung im ersten oder zweiten Werkstück bewegt wird.

15. Verfahren nach Anspruch 13, bei dem ein erstes und/oder zweites Werkzeug nach Anspruch 11 verwendet wird und zur Erzeugung des ersten und/oder zweiten Gewindes das erste und/oder zweite Werkzeug um seine Werkzeugachse gedreht wird und gleichzeitig axial zur Werkzeugachse in eine Vorbohrung im ersten oder zweiten Werkstück bewegt wird mit einer an die Gewindesteigung und die Drehgeschwindigkeit um die Werkzeugachse angepassten axialen Vorschubgeschwindigkeit.
